# EUROPÄISCHE PATENTSCHRIFT

(11) **EP 2 459 912 B1**
(45) Veröffentlichungstag und Bekanntmachung des Hinweises auf die Patenterteilung: **02.04.2014**
(21) Anmeldenummer: 10744504.1
(22) Anmeldetag: 26.07.2010
(51) Int. Cl.: F16K 17/30

(54) **GASSTRÖMUNGSWÄCHTER**
GAS FLOW MONITOR
CONTRÔLEUR D'ÉCOULEMENT DE GAZ

(30) Priorität: 31.07.2009 DE 102009036201
(43) Veröffentlichungstag der Anmeldung: 06.06.2012
(73) Patentinhaber: Mertik Maxitrol GmbH & Co. KG, 06502 Thale (DE)
(72) Erfinder: SCHULZE, Klaus, 06507 Gernrode (DE)
(74) Vertreter: Albrecht, Günter
(86) Internationale Anmeldenummer: PCT/EP2010/004562
(87) Internationale Veröffentlichungsnummer: WO 2011/012277

(56) Entgegenhaltungen:
- WO-A1-99/63254
- US-A- 2 873 760
- US-A- 3 918 481
- US-A1- 2002 130 291

## Beschreibung

### Technisches Gebiet

Die Erfindung betrifft einen Gasströmungswächter zum automatischen Absperren von nachgeordneten Gasleitungen bei Überschreitung eines definierten maximalen Durchflusses nach dem Oberbegriff des ersten Patentanspruches.

### Stand der Technik

Gasströmungswächter dienen dazu, bei einer Erhöhung des Gasverbrauches über einen vorgegebenen Wert, wie es beispielsweise bei Rohrleitungsbrüchen oder unzulässig hohen Leckagen der Fall ist, die Gaszufuhr in die nachfolgende Gasleitung zu unterbrechen. Es gibt sie in einer Vielzahl von Ausführungen. Sie werden in Rohrleitungen, wie zum Beispiel vor Gasarmaturen, Gasgeräten usw., eingesetzt. Um den gewünschten Schließ- bzw. Nenndurchfluss einzustellen, wird eine Feder durch veränderbare Anschläge so vorgespannt, dass durch die resultierende Kraft aus der Vorspannkraft der Feder und der Strömungskraft des Gasstromes der Gasströmungswächter seine Schließ- bzw. seine Offenstellung einnimmt.

Allen diesen Ausführungen ist es gemeinsam, dass sie auf einen definierten Schließdurchfluss, d.h. den Gasdurchfluss, bei dem der Gasströmungswächter schließt, justiert werden. Auf Grund der Sicherheitsanforderungen sind für die sich durch Herstellungstoleranzen ergebenden Abweichungen enge Grenzen gesetzt.

Dadurch haben sie den grundsätzlichen Nachteil, dass der Wert des Schließdurchflusses nur für die bei der vorgenommenen Justierung vorhandene Einbaulage des Gasströmungswächters zutrifft, weil ansonsten außer der Feder auch noch das Eigengewicht des Ventiltellers und eventueller weiterer mit ihm kombinierter Einzelteile wirkt. So haben die Gasströmungswächter in der Einbaulage vertikal nach oben einen höheren Schließdurchfluss als bei einem horizontalen Einbau. Das bedeutet, dass für die unterschiedlichen Einbaulagen unterschiedliche Varianten zur Verfügung stehen müssen. Das hat wiederum einen erhöhten Fertigungs- und Lageraufwand zur Folge.

Ein Gasströmungswächter, der mit einer einheitlichen Justierung für unterschiedliche Einbaulagen auskommt, ist beispielsweise aus der DE 10 2005 009 438 A1 bekannt. Dieser Gasströmungswächter ist so ausgeführt, dass die von einem Ventilsitz, einem dem Ventilsitz zugeordneten Schließkörper und einer Führung für den Schließkörper gebildete Ventilachse gegenüber der Gehäuseachse geneigt ist. Durch die geneigte Anordnung der Achse des aus Ventilsitz , Führung und Schließkörper bestehenden Ventils zur Achse des Gehäuses, in dem sich das Ventil befindet, ergeben sich mehrere Einbaulagen, in denen der Einfluss des Eigengewichtes der beweglichen Teile auf die Federkraft identisch ist, so dass sich in allen diesen Einbaulagen der gleiche Schließdurchfluss ergibt.

Von Nachteil ist bei dieser Lösung, dass das Gehäuse neben Gaseingang und Gasausgang eine zusätzliche Öffnung aufweist, die gasdicht und vor allen Dingen möglichst manipulationssicher verschlossen werden muss. Auch der Aufbau an sich ist sehr aufwendig in der Herstellung. Desweiteren muss bei einer Installation in horizontaler Lage darauf geachtet werden, dass die geneigte Ventilachse eine vorgeschriebene Lage einnimmt, damit der justierte Schließdurchfluss eingehalten wird. Das ist, insbesondere wenn das Gehäuse in eine Rohrleitung eingeschraubt werden muss, oft mit Schwierigkeiten verbunden.

Ein weiterer Gasströmungswächter, der mit einer einheitlichen Justierung bei unterschiedlichen Einbaulagen eingesetzt werden kann, ist in der DE 10 2006 028 466 A1 beschrieben. Hier wird der Ventilsitz des Ventilkörpers durch ein elastisches Dichtelement gebildet, an dem der Absperrkörper in der Schließstellung anliegt. Durch diese Maßnahme wird der Absperrkörper leichter, so dass sich die gewichtsbedingten Einflüsse, die sich aus der Einbaulage ergeben, minimiert werden.

Trotz einer Gewichtsminimierung ergibt sich bei den unterschiedlichen Einbaulagen durch das unterschiedlich wirkende Eigengewicht der sich beim Schließvorgang bewegenden Teile sowie der unterschiedlichen Reibungsverhältnisse eine Schwankung des Wertes für den Schließdurchfluss, der in die zugestandenen Abweichungen für die Herstellungstoleranzen eingeht, und somit dafür nicht mehr zur Verfügung steht, so dass herstellungsseitig erhöhte Aufwendungen nötig sind, um innerhalb der maximal zulässigen Abweichungen zu bleiben.

Besonders problematisch erweist sich die Einhaltung der zulässigen Abweichungen des Schließwertes, wenn es sich um Gasströmungswächter mit sehr kleiner Druckdifferenz handelt, wie sie insbesondere in der Hausinstallation gefordert werden, weil hier die Federkraft besonders gering sein muss, das Eigengewicht des Ventiltellers also einen größeren Anteil hat.

Auch für Gasströmungswächter, die eine Dämpfungsfunktion aufweisen, um ein Schließen bei kurzzeitigen Strömungsspitzen im dem Gasströmungswächter nachgeschalteten Leitungssystem zu verhindern, ist diese Lösung nicht geeignet. Für die Erreichung der Dämpfungsfunktion sind zusätzliche bauliche Aufwendungen erforderlich, die auch ein höheres Gewicht zur Folge haben.

Desweiteren ist die Lage des elastischen Dichtelements als Ventilsitz für eine optimale strömungstechnische Gestaltung von Nachteil, da sie zu einer Erhöhung des Druckverlustes führen kann.

In der DE 10 2007 008 285 A1 ist ein lageunabhängiger Strömungswächter und eine entsprechende Verbindungsanordnung beschrieben. Bei dieser Lösung ist ein Mittel zum Erhöhen der Strömungsgeschwindigkeit des im Strömungskanal strömenden Mediums vorgesehen. Durch die erhöhte Strömungsgeschwindigkeit wird die auf den Absperrkörper wirkende Kraft so verstärkt, dass das Gewicht des Absperrkörpers im Vergleich dazu klein ist.

Auch hier erfolgt, wenn auch nur relativ, eine Gewichtsminimierung. Desweiteren treten durch die zusätzliche Engstelle strömungstechnische Probleme, insbesondere ein höherer Druckverlust, auf, was zu den bereits weiter oben beschriebenen Nachteilen führt.

Aus dem Stand der Technik ist weiterhin ein in der US 3 918 481 beschriebener Durchflussbegrenzer bekannt. In einem rohrförmigen Gehäuse ist ein einstückig mit einem Schaft, dessen Durchmesser sich stromab verringert und der in einem Einschraubstück geführt wird, verbundener Schließkörper angeordnet, der sich unter der Kraft einer Schließfeder im Normalbetrieb auf einem Einsatz abstützt, wobei das Gas durch zwischen Einsatz und Schließkörper befindliche Schlitze strömen kann. Beim Auftreten eines erhöhten Gasdurchflusses hebt der Schließkörper vom Sitz ab, wodurch der Spalt zwischen dem Schaft und dem Einschraubstück verringert wird, so dass der Durchfluss begrenzt wird.

Ein Verwendung in unterschiedlichen Einbaulagen bei gleichem Wert des Schließdurchflusses ist auch bei dieser Ausführung nicht möglich.

### Darstellung der Erfindung

Der vorliegenden Erfindung liegt das Problem zugrunde, einen Gasströmungswächter der genannten Art zu entwickeln, bei dem der Schließdurchfluss in mehreren Einbaulagen den gleichen Wert besitzt. Desweiteren soll er für geringe Druckverlustwerte geeignet sein. Aufbau und Herstellung sollen möglichst einfach sein.

Erfndungsgemäß wird das Problem dadurch gelöst, dass bei einem Gasströmungswächter mit einem gasdichten Gehäuse, das im Inneren einen Ventilsitz für einen in einer Lagerstelle axial beweglichen Schließkörper aufweist, der durch Federkraft gegen die Durchströmrichtung in Offenstellung gehalten ist, das Spiel in einer als Lagerstelle dienenden Führungsbohrung in Offenstellung größer als in Schließstellung ist und sich bei Beginn der Schließbewegung über eine Schräge kontinuierlich verringert, wobei die Schräge zur Verringerung des Spieles in der Führungsbohrung bei Schließbeginn so festgelegt ist, dass zum Anheben des Schließkörpers bei waagerechter Einbaulage des Gasströmungswächters die gleiche Kraft in die Schließbewegungsrichtung erforderlich ist wie bei senkrechter Einbaulage des Gasströmungswächters mit Strömung nach oben.

Damit wurde eine Lösung gefunden, mit der die weiter oben genannten Nachteile des Standes der Technik beseitigt wurden. Mit dieser Lösung ergeben sich als mögliche Einbaulagen des Gehäuses des Gasströmungswächters der horizontale Einbau und der vertikale Einbau mit Strömungsrichtung nach oben. Diese beiden Einbaulagen können als die Mehrzahl aller Einbaufälle angesehen werden.

Dadurch, dass die Verringerung des Lagerspieles bei Schließbeginn durch eine Schräge erfolgt, die so festgelegt ist, dass zum Anheben des Schließkörpers bei waagerechter Einbaulage des Gasströmungswächters etwa die gleiche Kraft gegen die Schließbewegung erforderlich ist wie bei senkrechter Einbaulage des Gasströmungswächters mit Strömung nach oben, ergibt sich eine einfache Herstellung.

Weitere vorteilhafte Ausgestaltungen der Erfindung gehen aus den anderen Patentansprüchen hervor.

So ergibt sich eine günstige Ausgestaltung, wenn die spielbehaftete Lagerstelle durch eine im Gehäuse mittig angeordnete Führung gebildet wird, die in axialer Richtung mittig eine Durchgangsbohrung aufweist, die zumindest teilweise als Führungsbohrung für einen längsbeweglichen die Schräge aufweisenden Stift ausgebildet ist, der fest mit dem Schließkörper verbunden ist.

Insbesondere diese erfindungsgemäße Ausgestaltung ist auch für Gasströmungswächter geeignet, die eine Dämpfungsfunktion aufweisen. Diese Dämpfungsfunktion ist immer dann wünschenswert, wenn es im dem Gasströmungswächter nachgeschalteten Leitungssystem zu kurzzeitigen Strömungsspitzen kommen kann, die so weit über dem normalen Verbrauchswert liegen, dass der eingestellte Schließdurchfluss überschritten wird. Als Beispiel seien hier nur Gasgeräte genannt, die durch ein schlagartig öffnendes Magnetventil geschaltet werden. Durch diese Dämpfungsfunktion tritt auch bei einem eingestellten Schließdurchfluss nahe dem Normalverbrauch, wie es aus Sicherheitsgründen wünschenswert ist, kein ungewolltes Schließen des Gasströmungswächters auf.

Dazu weist die Führung eine zylindrische Erweiterung auf, die stirnseitig durch eine Kappe verschlossen ist. In diesen durch die Erweiterung und die Kappe gebildeten Raum ragt der Stift hinein, der über eine schwenkbare Verbindung mit einem Dämpfungskolben verbunden ist, der an der Innenwandung längsbeweglich geführt ist. Dadurch wird eine Teilung dieses Raumes erreicht und der bei einer Bewegung des Schließkörpers notwendige Volumenausgleich über die durch Dämpfungskolben und Innenwandung gebildete Drosselstelle führt während des Auftretens einer Strömungsspitze nicht zum schlagartigen Schließen des Gasströmungswächters. Nach dem Abklingen der Strömungsspitze wird der Schließkörper durch eine Feder wieder in seine Offenstellung gebracht.

Eine weitere bevorzugte Ausgestaltung der Erfindung ergibt sich, wenn die spielbehaftete Lagerstelle durch eine mittig im Schließkörper befindliche Führungsbohrung gebildet wird, wobei der Schließkörper auf einem die Schräge aufweisenden und fest mit dem Gehäuse verbundenen Stift längsbeweglich gelagert ist.

Diese Ausführung erweist sich als besonders günstig, wenn es sich um Gasströmungswächter handelt, die mit einer sogenannten Überströmöffnung ausgerüstet sind, die eine automatische Wiederöffnung nach Beseitigung der Schließursache ermöglichen. Hier kann der zwischen Stift und Schließkörper bestehende Ringspalt zumindest für die Geschlossenstellung so festgelegt werden, dass er die erforderliche Überströmöffnung bildet.

Eine andere mögliche Ausgestaltung besteht darin, dass das Gehäuse als Führungsbohrung dienende Führungsrippen für eine axial verschiebliche Lagerung des Schließkörpers aufweist. Diese Ausführung zeichnet sich dadurch aus, dass der Schließkörper besonders leicht ist. Desweiteren sind Gehäuse und Schließkörper sehr gut für eine Herstellung aus Kunststoff geeignet. Auch eine gewünschte Überströmöffnung kann sehr einfach und mit sehr hoher Genauigkeit in den Schließkörper eingebracht werden.

### Ausführungsbeispiel

Beispielhafte Ausgestaltungen eines erfindungsgemäßen Gasströmungswächters werden nachstehend an Ausführungsbeispielen näher beschrieben. Es zeigen:
- Fig. 1: einen erfindungsgemäßen Gasströmungswächter in Offenstellung bei senkrechter Einbaulage,
- Fig. 2: einen erfindungsgemäßen Gasströmungswächter mit Dämpfungsfunktion in Offenstellung bei waagerechter Einbaulage,
- Fig. 3: eine Detailansicht A aus Fig. 2,
- Fig. 4: einen erfindungsgemäßen Gasströmungswächter mit Dämpfungsfunktion in Geschlossenstellung bei waagerechter Einbaulage,
- Fig. 5: eine andere Ausführung eines erfindungsgemäßen Gasströmungswächters -mit Dämpfungsfunktion in Offenstellung bei waagerechter Einbaulage,
- Fig. 6: eine weitere Ausführung eines erfindungsgemäßen Gasströmungswächters in Offenstellung bei waagerechter Einbaulage,
- Fig. 7: eine schematische Darstellung einer Ausführung eines erfindungsgemäßen Gasströmungswächters in Offenstellung bei waagerechter Einbaulage,

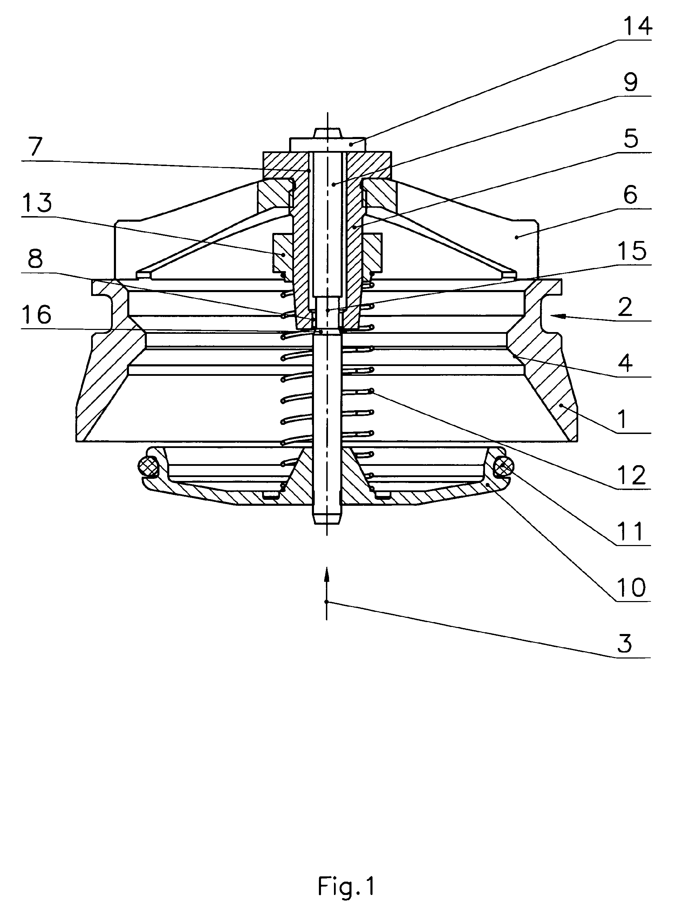

In der Figur 1 ist ein erstes Ausführungsbeispiel eines erfindungsgemäßen Gasströmungswächters in Offenstellung gezeigt. Der Gasströmungswächter ist in senkrechter Einbaulage dargestellt. Er besitzt ein rohrförmiges Gehäuse 1, das in eine nicht dargestellte Gasleitung eingedrückt werden kann. Um die notwendige Dichtheit zwischen der Gasleitung und dem Gehäuse 1 zu garantieren, weist das Gehäuse 1 eine umlaufende Nut 2 für einen ebenfalls nicht dargestellten O-Ring auf. Es versteht sich von selbst, dass auch ein anderer Anschluss möglich ist.

In der durch einen Richtungspfeil 3 gezeigten Richtung kann Gas durch das Gehäuse 1 hindurchströmen. In etwa mittig besitzt das Gehäuse 1 eine Verengung, die auf ihrer dem Gaseingang zugewandten Seite als Ventilsitz 4 ausgebildet ist. Am ausgangsseitigen Ende des Gehäuses 1 befindet sich eine Führung 5, die durch mehrere radiale Stege 6 gebildete Durchströmöffnungen für den Gasstrom aufweist. Über die Stege 6 ist die Führung 5, in diesem Ausführungsbeispiel durch Verschrauben mit dem Gehäuse 1 verbunden.

Die Führung 5 weist in axialer Richtung mittig eine Durchgangsbohrung 7 auf, die zumindest teilweise als Führungsbohrung 8 für einen längsbeweglichen Stift 9 ausgebildet ist, der an seinem ausgangsseitigen Ende einen Anschlag 14 besitzt. Auf dem eingangsseitigen Ende des Stiftes 9 ist ein tellerförmiger Schließkörper 10 beispielsweise mittels Presspassung befestigt. Zum Erzielen der gewünschten Dichtheit bei der Geschlossenstellung des Gasströmungswächters besitzt der Schließkörper 10 eine ringförmige Nut für einen als elastisches Abdichtelement dienenden O-Ring 11. Auf der dem Gehäuse 1 zugewandten Seite des Schließkörpers 10 liegt eine Feder 12 an, die sich mit ihrem anderen Ende auf einem Justierelement 13 abstützt, das auf der Führung 5 lageeinstellbar, in diesem Beispiel schraubbar, angeordnet ist. Unter der Kraft der Feder 12 liegt der Anschlag 14 an der Führung 5 an und begrenzt so den maximalen Öffnungshub des Schließkörpers 10.

Wie aus der Fig. 1 zu erkennen ist, besitzt der Stift 9 eine Einschnürung 15, die in Offenstellung des Gasströmungswächters den Bereich der Führungsbohrung 8 überdeckt. Der außerhalb der Führungsbohrung 8 befindliche Übergangsbereich, der mit Beginn der Schließbewegung des Schließkörpers 10 in die Führungsbohrung 8 eintritt ist in Form einer Schräge 16 ausgebildet, die einen kontinuierlichen Übergang gewährleistet.

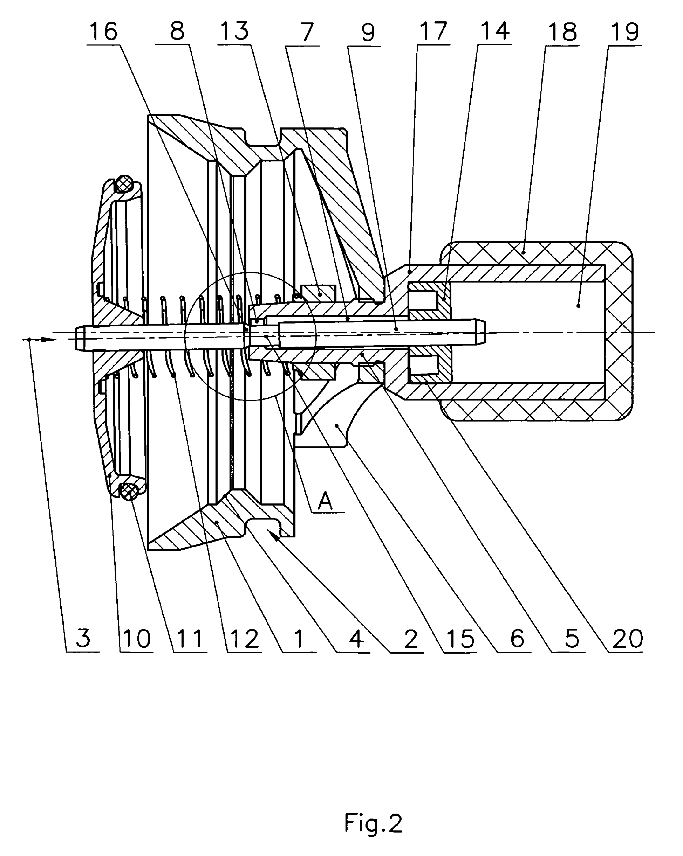

Als ein weiteres Ausführungsbeispiel ist in der Figur 2 eine veränderte Ausführung des erfindungsgemäßen Gasströmungswächters ebenfalls in der Offenstellung gezeigt. Diesmal jedoch in waagerechter Einbaulage. Der Gasströmungswächter ist mit einer Dämpfungsfunktion versehen, die ihn gegenüber Schwingungen unempfindlicher macht. Die entsprechende Notwendigkeit wurde bereits weiter oben gewürdigt.

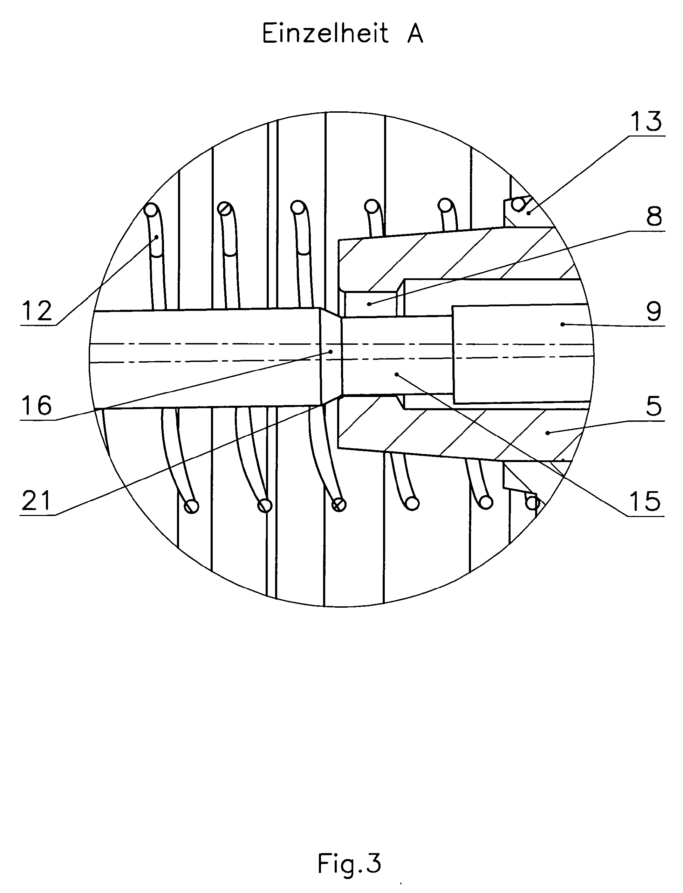

Wie zu erkennen ist, stimmen die Längsachse des Ventilsitzes 4 und die Längsachse des Schließkörpers 10, die bei der in diesem Ausführungsbeispiel gezeigten festen Verbindung zwischen Stift 9 und Schließkörper 10 mit der Längsachse des Stiftes 9 identisch ist, nicht überein. Aus der in Fig.3 in vergrößerter Form dargestellten Einzelheit A aus Fig.2 ist zu erkennen, dass die bereits weiter oben beschriebene Einschnürung 15 in der Führungsbohrung 8 einseitig an einem Auflagepunkt 21 anliegt und so die Lageveränderung des Schließkörpers 10 hervorruft.

Bei Beginn der Schließbewegung gleitet die Schräge 16 in die Führungsbohrung 8 und bewirkt ein Anheben des Schließkörpers 10, bis die Längsachsen von Ventilsitz 4 und Schließkörper 10 etwa identisch sind.

Dabei ist die Schräge 16 so festgelegt, dass die notwendige Kraft zu ihrer Überwindung in etwa der Kraft entspricht, die sich aus dem Gewicht der beweglichen Teile, in diesem Fall Schließkörper 10 und Stift 9, bei senkrechter Einbaulage des Gasströmungswächters und einer nach oben gerichteten Gasströmung ergibt.

Damit entsteht die gewünschte Lösung, dass der Schließdurchfluss eines Gasströmungswächters in beiden gezeigten Einbaulagen nahezu den gleichen Wert besitzt.

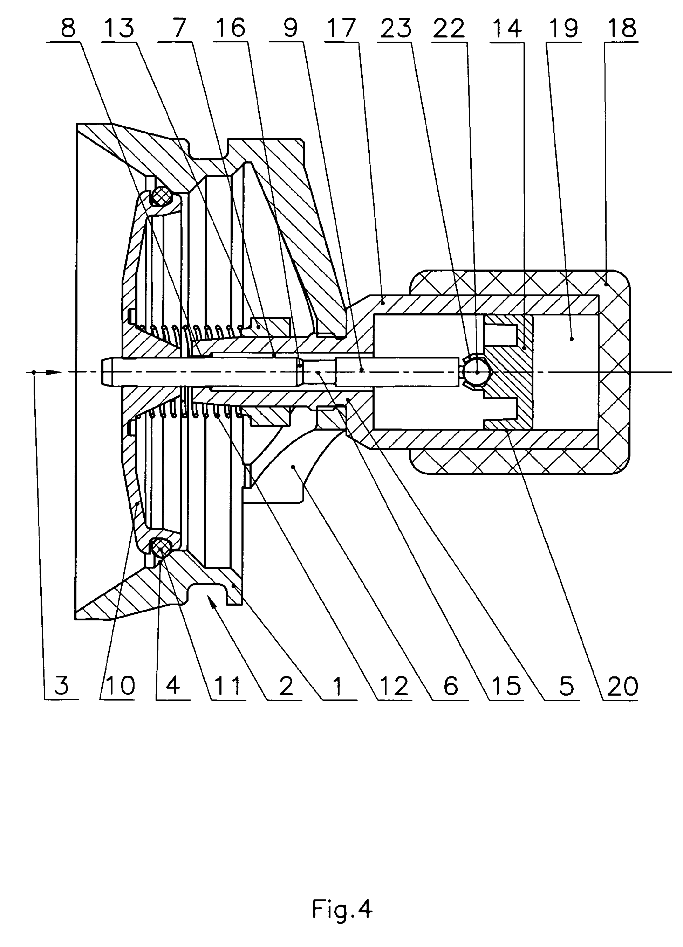

Neben dem ansonsten grundsätzlich gleichen Aufbau wie der in Figur 1 dargestellte Gasströmungswächter, besitzt die Führung 5 auf ihrer dem Gehäuse 1 abgewandten Seite eine zylindrische Erweiterung 17, die stirnseitig durch eine Kappe 18 verschlossen ist. Der in den durch Erweiterung 17 und Kappe 18 gebildeten Raum 19 hineinragende Stift 9 wird über den Anschlag 14 des Stiftes 9 an der Innenwandung längsbeweglich geführt. Dabei bilden Anschlag 14 und Innenwandung einen Ringspalt 20, der bei einer Bewegung des Schließkörpers 10 eine Drosselstelle für den notwendigen Volumenausgleich bildet. Dadurch führt ein kurzfristiges Auftreten einer Strömungsspitze, deren Wert über dem Schließdurchfluss liegt nicht zum schlagartigen Schließen des Gasströmungswächters, sondern nur zum Beginn einer verzögerten Schließbewegung. Nach dem Abklingen der Strömungsspitze wird der Schließkörper 10 durch die Feder 12 wieder in seine Offenstellung gebracht. Wird jedoch der Schließdurchfluss über einen längeren Zeitraum überschritten, wie es bei einem Leck der Fall ist, so nimmt der Gasströmungswächter die Geschlossenstellung ein, wie sie in der Figur 4 dargestellt ist.

Um eventuelle Probleme bei der Gewährleistung der Dichtungsfunktion auf Grund der Schiefstellung des Stiftes 9 zu vermeiden ist in Fig. 4 in Abwandlung zur Fig.3 der Anschlag 14 schwenkbar auf dem Stift 9 befestigt. Das kann, wie gezeigt, dadurch erfolgen, dass der Stift 9 an seinem in den Raum 19 hineinragenden Ende als Kugel 22 ausgebildet ist, die durch Zungen 23 teilweise umschlossen wird.

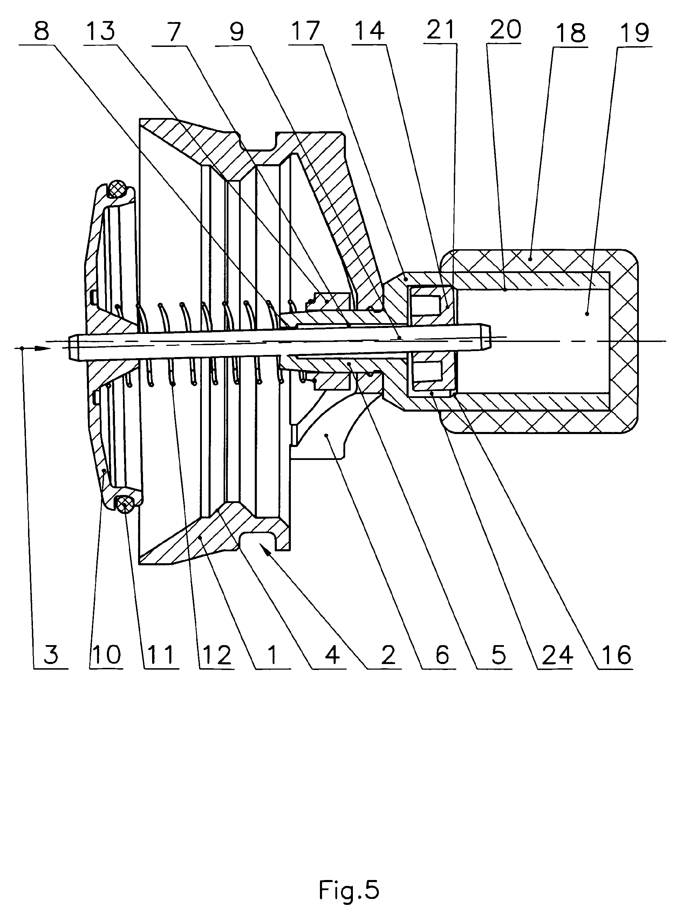

Ein weiteres modifiziertes Ausführungsbeispiel ist in Fig. 5 dargestellt. Auch hier handelt es sich, wie bei dem in Fig.3 gezeigten Beispiel um einen Gasströmungswächter, der mit einer Dämpfungsfunktion ausgerüstet ist. Hier bietet es sich an, die Lageänderung des Schließkörpers 10 nicht über eine Einschnürung 15 am Stift 9 hervorzurufen, sondern dazu das Dämpfungselement zu nutzen.

Zu diesem Zweck besitzt die zylindrische Erweiterung 17 in dem Bereich, wo sich der Anschlag 14 bei Offenstellung des Gasströmungswächters befindet eine umlaufende Ausnehmung 24, die sich über die Schräge 16 wieder auf das ursprüngliche Maß verengt.

Auf Grund des größeren Spiels kommt es auch hier bei der waagerechten Einbaulage zu einer Lageveränderung des Schließkörpers 10, der fest mit dem Stift 9 verbunden ist, bis der Anschlag 14 am Auflagepunkt 21 anliegt. Bei Beginn der Schließbewegung gleitet der Anschlag 14 über die Schräge 16 in den Raum 19 und bewirkt ein Anheben des Schließkörpers 10.

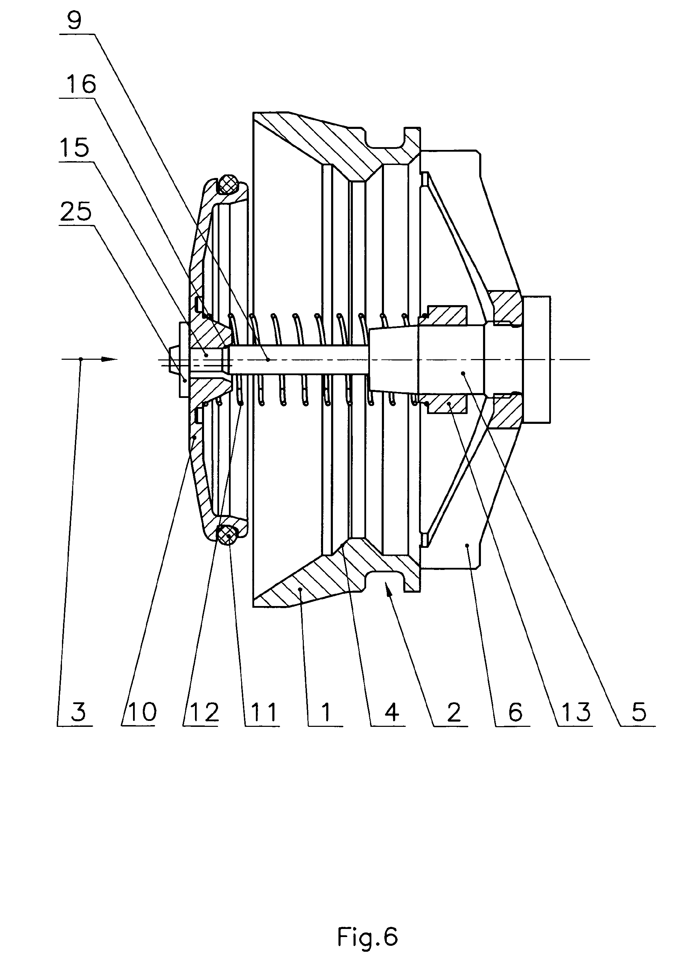

In Fig. 6 ist eine Ausführungsform eines Gasströmungswächters wieder in waagerechter Einbaulage gezeigt, bei welcher der Stift 9 fest mit dem Gehäuse 1 verbunden ist. Auf dem Stift 9 ist der Schließkörper 10 axial beweglich gelagert und liegt unter der Krafteinwirkung der Feder 12 an einer fest auf dem Stift 9 angeordneten Scheibe 25 an, wodurch die Offenstellung definiert ist.

Im Lagebereich des Schließkörpers 10 bei Offenstellung auf dem Stift 9 besitzt derselbe eine Einschnürung 15, die über eine sich außerhalb der Lagerstelle des Schließkörpers 10 sich anschließende Schräge 16 beendet wird. In der Einschnürung 15 stützt sich der Schließkörper 10 auf Grund der waagerechten Einbaulage einseitig ab. Bei Beginn der Schließbewegung gleitet der Schließkörper 10 über die Schräge 16, wobei er angehoben wird, in seine Geschlossenstellung.

Dabei ist die Schräge 16 so festgelegt, dass die notwendige Kraft zu ihrer Überwindung in etwa der Kraft entspricht, die sich aus dem Gewicht des in diesem Fall einzigen beweglichen Teiles, des Schließkörper 10, bei senkrechter Einbaulage des Gasströmungswächters und einer nach oben gerichteten Gasströmung ergibt. Günstigerweise ist der bei dieser Ausführung notwendige Ringspalt zwischen Stift 9 und Schließkörper 10 zumindest in dieser Stellung so festgelegt, dass er eine erforderliche Überströmöffnung für eine automatische Wiederöffnung nach Beseitigung der Schließursache bildet.

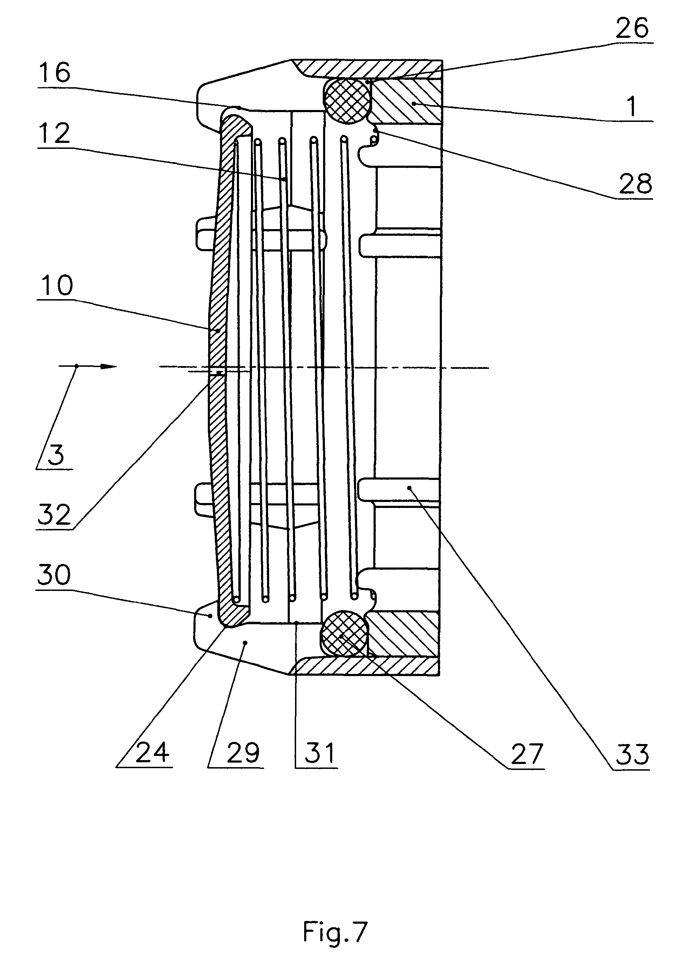

Eine schematische Darstellung einer weiteren Ausführung eines erfindungsgemäßen Gasströmungswächters in Offenstellung bei waagerechter Einbaulage ist in Fig. 7 dargestellt. Das Gehäuse 1 weist im Inneren eine umlaufende Nut 26 auf, in der ein als Ventilsitz dienender O-Ring 27 axial gelagert ist. Desweiteren sind im Inneren des Gehäuses 1 in Strömungsrichtung nach dem O-Ring 27 Rippen 33, in diesem Ausführungsbeispiel sechs Stück, angeordnet, auf deren dem O-Ring zugewandten Stirnseiten eine Auflage 28 für die sich abstützende Feder 12 gebildet wird. Die andere Seite der Feder 12 wirkt in Öffnungsrichtung auf den Schließkörper 10, der in am Gehäuse 1 ausgebildeten Führungsrippen 29, ebenfalls sechs Stück, an einer Führungskontur 31 axial beweglich gelagert ist und sich am Ende an nach innen abgebogenen Haken 30 abstützt.

Die durch die Führungsrippen 29 gebildete Führungskontur 31 weist in dem Bereich, wo sich der Schließkörper 10 in Offenstellung befindet die Ausnehmung 24 auf, die über die Schräge 16 auf die Führungskontur 31 führt.

Auch hier ist der Schließkörper 10 in Offenstellung auf Grund der waagerechten Einbaulage einseitig in der Ausnehmung 24 gelagert und wird mit Beginn der Schließbewegung angehoben, um dann geführt durch die Führungskontur31 die nicht dargestellte Schließstellung einzunehmen.

Diese Ausführung ist besonders dazu geeignet aus Kunststoffteilen hergestellt zu werden und zeichnet sich durch ihre Einfachheit aus. Insbesondere der Schließkörper 10 weist ein sehr geringes Gewicht auf. Desweiteren kann bei dieser Ausführung eine gewünschte Überströmöffnung 32 sehr einfach und mit sehr hoher Genauigkeit in den Schließkörper 10 eingebracht werden.

**Aufstellung der Bezugszeichen**

| | | | |
|---|---|---|---|
| 1 | Gehäuse | 29 | Führungsrippe |
| 2 | Nut | 30 | Haken |
| 3 | Richtungspfeil | 31 | Führungskontur |
| 4 | Ventilsitz | 32 | Überströmöffnung |
| 5 | Führung | 33 | Rippe |
| 6 | Steg | | |
| 7 | Durchgangsbohrung | | |
| 8 | Führungsbohrung | | |
| 9 | Stift | | |
| 10 | Schließkörper | | |
| 11 | O-Ring | | |
| 12 | Feder | | |
| 13 | Justierelement | | |
| 14 | Anschlag | | |
| 15 | Einschnürung | | |
| 16 | Schräge | | |
| 17 | Erweiterung | | |
| 18 | Kappe | | |
| 19 | Raum | | |
| 20 | Ringspalt | | |
| 21 | Auflagepunkt | | |
| 22 | Kugel | | |
| 23 | Zunge | | |
| 24 | Ausnehmung | | |
| 25 | Scheibe | | |
| 26 | Nut | | |
| 27 | O-Ring | | |
| 28 | Auflage | | |

## Patentansprüche

1. Gasströmungswächter zum automatischen Absperren von nachgeordneten Gasleitungen bei Überschreitung eines definierten maximalen Durchflusses mit einem gasdichten Gehäuse (1), das im Inneren einen Ventilsitz (4) für einen in einer Lagerstelle geführten axial beweglichen Schließkörper (10) aufweist, der durch Federkraft gegen die Durchströmrichtung in Offenstellung gehalten ist, wobei das Spiel in einer als Lagerstelle dienenden Führungsbohrung (8) in Offenstellung größer als in Schließstellung ist und sich bei Beginn der Schließbewegung über eine Schräge (16) kontinuierlich verringert, wobei die Schräge (16) zur Verringerung des Spieles in der Führungsbohrung (8) bei Schließbeginn so festgelegt ist, dass zum Anheben des Schließkörpers (10) bei waagerechter Einbaulage des Gasströmungswächters die gleiche Kraft in die Schließbewegungsrichtung erforderlich ist wie bei senkrechter Einbaulage des Gasströmungswächters mit Strömung nach oben.

2. Gasströmungswächter nach Patentanspruch 1, **dadurch gekennzeichnet, dass** die spielbehaftete Lagerstelle durch eine im Gehäuse (1) mittig angeordnete Führung (5) gebildet wird, die in axialer Richtung mittig eine Durchgangsbohrung (7) aufweist, die zumindest teilweise als Führungsbohrung (8) für einen längsbeweglichen die Schräge (16) aufweisenden Stift (9) ausgebildet ist, der fest mit dem Schließkörper (10) verbunden ist.

3. Gasströmungswächter nach Patentanspruch 1, **dadurch gekennzeichnet, dass** die spielbehaftete Lagerstelle durch eine mittig im Schließkörper (10) befindliche Führungsbohrung (8) gebildet wird, wobei der Schließkörper (10) auf einem die Schräge (16) aufweisenden und fest mit dem Gehäuse (1) verbundenen Stift (9) längsbeweglich gelagert ist.

4. Gasströmungswächter nach Patentanspruch 1, **dadurch gekennzeichnet, dass** der Schließkörper (10) in mit dem Gehäuse (1) fest verbundenen als Führungsbohrung (8) dienenden Führungsrippen (29) axial verschieblich gelagert ist.

## Claims

1. Gas flow monitor for automatically shutting off downstream gas conduits when a defined maximum flow is exceeded, with a gas-tight housing (1) that has in its interior a valve seat (4) for an axially movable closing body (10) which is guided in a mounting and held in the open position by spring force against the direction of flow, wherein the play in a guide bore (8) serving as a mounting is greater in the open position than in the closed position and is continuously reduced at the start of the closing movement by a bevel (16), wherein the bevel (16) for reducing the play in the guide bore (8) at the start of the closing operation is determined in such a manner that the same force is required to lift the closing body (10) in the direction of the closing movement when the gas flow monitor is installed horizontally as when it is installed vertically with an upward flow direction.

2. Gas flow monitor according to claim 1, **characterised in that** the mounting exhibiting play is formed by a guide (5) which is arranged centrally in the housing (1) and has a throughbore (7) arranged centrally in the axial direction which is formed at least partly as a guide bore (8) for a longitudinally movable pin (9) which has the bevel (16) and which is permanently connected to the closing body (10).

3. Gas flow monitor according to claim 1, **characterised in that** the mounting exhibiting play is formed by a guide bore (8) located centrally in the closing body (10), with the closing body (10) mounted so as to be longitudinally movable on a pin (9) which has the bevel (16) and which is permanently connected to the housing (1).

4. Gas flow monitor according to claim 1, **characterised in that** the closing body (10) is mounted so as to be axially displaceable in guide ribs (29) which are permanently connected to the housing (1) and which serve as guide bore (8).

## Revendications

1. Dispositif de surveillance de l'écoulement d'un gaz pour la fermeture automatique de conduites de gaz montées en aval en cas de dépassement d'un débit maximal défini, ayant un boîtier (1) étanche au gaz qui comprend à l'intérieur un siège de soupape (4) pour un corps de fermeture (10) mobile axialement et guidé dans un point d'appui, qui est maintenu dans une position d'ouverture contre le sens de l'écoulement par la force d'un ressort, le jeu dans un trou de guidage (8) servant de point d'appui étant plus grand en position d'ouverture qu'en position de fermeture et se diminuant continuellement au début du mouvement de fermeture par un biseau (16), le biseau (16) destiné à diminuer le jeu dans le trou de guidage (8) étant défini au début de la fermeture de telle manière que le soulèvement du corps de fermeture (10) exige la même force dans le sens du mouvement en cas de position de montage horizontale du dispositif de surveillance de l'écoulement d'un gaz qu'en cas de position de montage verticale du dispositif de surveillance de l'écoulement d'un gaz à écoulement dirigé vers le haut.

2. Dispositif de surveillance de l'écoulement d'un gaz selon la revendication 1, **caractérisé en ce que** le point d'appui présentant du jeu est formé par un guidage (5) disposé au milieu du boîtier (1) qui, en direction axiale, comprend un trou de passage (7) au milieu qui est au moins partiellement formé en tant que trou de guidage (8) conçu pour une tige (9) déplaçable longitudinalement comprenant le biseau (16), qui est reliée de manière fixe au corps de fermeture (10).

3. Dispositif de surveillance de l'écoulement d'un gaz selon la revendication 1, **caractérisé en ce que** le point d'appui présentant du jeu est formé par un trou de guidage (8) situé au milieu du corps de fermeture (10), le corps de fermeture (10) étant monté de manière à être déplacé longitudinalement sur une tige (9) comprenant le biseau (16) et reliée de manière fixe au boîtier (1).

4. Dispositif de surveillance de l'écoulement d'un gaz selon la revendication 1, **caractérisé en ce que** le corps de fermeture (10) est monté de manière à être déplacé axialement dans des nervures de guidage (29) reliées de manière fixe au boîtier (1) et servant de trou de guidage (8).
